(19) Europäisches Patentamt

European Patent Office

Office européen des brevets

(11) **EP 0 849 065 B1**

(12) **EUROPÄISCHE PATENTSCHRIFT**

(45) Veröffentlichungstag und Bekanntmachung des Hinweises auf die Patenterteilung:
**03.04.2002   Patentblatt 2002/14**

(51) Int Cl.⁷: **B29C 47/56**, F16L 43/00, B29C 47/58

(21) Anmeldenummer: **97121797.1**

(22) Anmeldetag: **11.12.1997**

(54) **Kompensator zum Ausgleich der durch Temperatureinflüssen hervorgerufenen Längenänderungen**

Compensator to absorb changes in length due to temperature changes

Compensateur pour absorber des changements de longueur dus aux changements de température

(84) Benannte Vertragsstaaten:
**AT BE DE ES FR GB IT NL**

(30) Priorität: **19.12.1996   DE 19652952**

(43) Veröffentlichungstag der Anmeldung:
**24.06.1998   Patentblatt 1998/26**

(73) Patentinhaber: **Trespaphan GmbH**
**66539 Neunkirchen (DE)**

(72) Erfinder: **Freynhofer, Albrecht**
**66578 Schiffweiler (DE)**

(74) Vertreter: **Luderschmidt, Schüler & Partner GbR Patentanwälte,**
**Postfach 3929**
**65029 Wiesbaden (DE)**

(56) Entgegenhaltungen:
GB-A- 1 591 317          US-A- 3 692 447
US-A- 3 849 051          US-A- 5 137 675

• **PATENT ABSTRACTS OF JAPAN vol. 095, no. 003, 28.April 1995 & JP 06 346993 A (ISHIKAWAJIMA HARIMA HEAVY IND CO LTD), 20.Dezember 1994,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft einen Kompensator zum Ausgleich der durch Temperatureinflüsse hervorgerufenen Längenänderungen festinstallierter Einrichtungen, wie Leitungen, Durchflußkanäle und dergleichen, durch die ein Produkt hindurchfließt.

Bei einer Vielzahl von Kunststoffverarbeitungsmaschinen, die Granulate aufschmelzen und in eine gemeinsame Breitschlitzdüse einspeisen, um eine Mehrschichtfolie zu koextrudieren, ergibt sich die Schwierigkeit, daß infolge des Schmelzeflusses bei Temperaturen bis zu 300 °C es zu Wärmeausdehnungen der Schmelzeleitungen kommt, die Koextruder und Extruder mit einem Adapter und/oder einer Mehrschichtdüse bzw. Breitschlitzdüse verbinden. Dabei kann sich beim Aufheizen der Schmelzestrecke auf Betriebstemperaturen im Bereich von bis zu 300 °C aufgrund der Wärmeausdehnung die Länge von Schmelzeleitungen um ca. bis zu 2,8 mm/lfdm verändern. Diese Längenänderungen bzw. Wärmeausdehnungen der Schmelzeleitungen erfolgen gemäß der Formel

$$l_w = l_k + (l_k \cdot \Delta t \cdot c) = l_k + (l_k \cdot 250 \ °C \cdot 11 \cdot 10^{-6} / °C)$$

Diese Längenänderung, ausgehend von einem Festpunkt, verschiebt die Koextruder über die Breitschlitzdüse hinweg nach hinten. Bekannte Anlagen mit Extrudern und Koextrudern sind daher, wie zum Beispiel in der US-A-3 849 051 offenbart, so aufgebaut, daß die Koextruder in Achsenrichtung verfahrbar sind, unter der Voraussetzung, daß die Schmelzeleitungen gleichfalls in oder parallel zur Achsenrichtung verlaufen.

Bei wie zum Beispiel aus der US-A-5 137 675 bekannten rechtwinkligen zum Folienabzug von der Breitschlitzdüse angeordneten Koextrudern, die aus Gründen der Platzersparnis so aufgestellt sind, ergeben sich aufgrund dieser Längenänderungen der Schmelzeleitungen Undichtigkeiten an den 90°-Knickstellen der Schmelzeleitungen, und es kann zur Zerstörung von Spannketten mit entsprechend einhergehender Unfallgefahr kommen. Um derartige Probleme zu vermeiden, können die Koextruder in Richtung ihrer Querachse entsprechend der Wärmeausdehnung der Schmelzeleitungen nachgefahren werden, wozu jedoch aufwendige Verschiebevorrichtungen, kombiniert mit entsprechenden Wegmeßsystemen notwendig sind. Dadurch ergeben sich erhebliche Mehrkosten pro Extruderanlage, da Längenausdehnungen im Bereich von 15 bis 25 mm pro Koextruder ausgeglichen werden müssen.

Zur Umlenkung eines Schmelzeflusses sind sogenannte Anfahrventile bekannt, bei denen in einer Anfahrstellung der Schmelzefluß während der Startphase aus dem Extruder heraus ins Freie umgelenkt wird, um unerwünschtes Material abzuführen. Nach diesem Spülvorgang wird das Ventil in seine Betriebsposition umgeschaltet. Das bekannte Anfahrventil verfügt über ein Hydrauliksystem, das eine Umschaltung des Ventils in die jeweils benötigte Arbeitsstellung bei laufendem Extruder ermöglicht.

Aufgabe der Erfindung ist es, eine Vorrichtung zu schaffen, die thermisch bedingte Längenänderungen von Leitungen kompensiert, die Extruder und Koextruder mit einem Adapter und einer Breitschlitzdüse verbinden, um so Undichtigkeiten an den Knickstellen der Leitungen und die Zerstörung von Spannketten, die die Knickstellen verbinden, zu vermeiden.

Diese Aufgabe wird erfindungsgemäß durch einen Kompensator zum Ausgleich der durch Temperatureinflüsse hervorgerufenen Längenänderungen festinstallierter Einrichtungen, wie Leitungen, Durchflußkanäle und dergleichen, durch die ein Produkt hindurchfließt, in der Weise gelöst, daß der Kompensator in einem Gehäuseblock einen Schiebekolben enthält, der drehgesichert gegenüber dem Gehäuseblock ist, daß der Schiebekolben entlang eines produktdichten Schiebesitzes im Gehäuseblock beweglich ist und daß der Kompensator einen geknickten Durchflußkanal aufweist, der jeweils an einer Eintritts- und Austrittsseite mit einem Flansch zum Anschluß der festinstallierten Einrichtungen ausgestattet ist.

In Ausgestaltung der Erfindung nimmt der Gehäuseblock den Schiebekolben auf, ist in dem unteren Teil des Gehäuseblocks ein erster Durchflußkanalabschnitt des Durchflußkanals vorhanden und ist der Teil mit einem Eintrittsflansch ausgestattet.

In Weiterbildung der Erfindung enthält der Schiebekolben einen zweiten Durchflußkanalabschnitt mit Kniebogen des Durchflußkanals und nimmt bei Betriebstemperatur des die festinstallierten Einrichtungen und den Kompensator durchströmenden Produkts eine Stellung innerhalb des Schiebesitzes ein, in der der Kniebogen deckungsgleich mit dem ersten Durchflußkanalabschnitt im Gehäuseblock ist, der mit einem Austrittsflansch ausgestattet ist.

Der Kompensator hat, rein äußerlich gesehen, die Form eines herkömmlichen Gehäuseblocks, besteht jedoch aus zwei Teilen, zum einen aus einem Gehäuseteil mit dem Anschlußflansch für den Produktzulauf sowie zum anderen aus einem Schiebekolben mit dem Anschlußflansch für den Produktaustritt in Richtung des Extrusionswerkzeuges (Mehrschichtdüse oder Adapter). Der Schiebekolben ist im Gehäuseblock beweglich entlang eines produktdichten Schiebesitzes geführt, verdrehgesichert in seiner Längsachse, und besitzt im Kanalbereich die eigentliche Winkelbohrung (Kniebogen), die nach Erreichen der Betriebstemperatur deckungsgleich zu der Zulaufbohrung des festinstallierten Gehäuseblocks zu liegen kommt.

Die weitere Ausgestaltung des erfindungsgemäßen Kompensators ergibt sich aus den Merkmalen der Patentansprüche 4 bis 8.

Der Kompensator wird erfindungsgemäß als Verbindungselement zweier rechtwinklig zueinander verlaufender Schmelzeleitungen einer Koextrusionsanlage für Mehrschichtfolien verwendet. Dabei erfolgt eine Verwendung des Kompensators zum Ausgleich der axialen Wärmedehnungen der mit ihm verbundenen Schmelzeleitungen und des an eine der Schmelzeleitungen angeschlossenen Koextruders.

Mit der Erfindung wird der Vorteil einer erheblichen Kosteneinsparung erzielt, da die im Stand der Technik üblichen aufwendigen Verschiebeeinrichtungen kombiniert mit entsprechenden Wegmeßsystemen entfallen können, die erforderlich sind, um beispielsweise in einer Extrusionsanlage die Koextruder in Richtung ihrer Querachse entsprechend der Wärmeausdehnung nachzufahren. Im Vergleich zu den Verschiebeeinrichtungen mit entsprechenden Wegmeßsystemen ist der erfindungsgemäße Kompensator sehr kostengünstig herzustellen, da er im wesentlichen aus zwei Teilen besteht, nämlich einem Gehäuseblock für die Aufnahme eines Schiebekolbens und dem dazugehörigen Schiebekolben.

Im folgenden wird die Erfindung anhand der Zeichnungen näher erläutert. Es zeigen:

Fig. 1   eine Ansicht eines Kompensators nach der Erfindung,

Fig. 2   einen Schnitt durch den Kompensator nach Fig. 1,

Fig. 3   schematisch eine Extrusionsanlage mit zwei Koextrudern und einem Hauptextruder, bei der an den Knickstellen der Leitungen zwischen Koextruder, Hauptextruder und einem Adapter je ein Kompensator in den Leitungen eingebaut ist, und

Fig. 4   schematisch eine weitere Extrusionsanlage mit zwei Koextrudern und einem Hauptextruder, bei der Kompensatoren an den Knickstellen der Leitungen eingebaut sind, welche die Koextruder und den Hauptextruder mit einem Adapter verbinden.

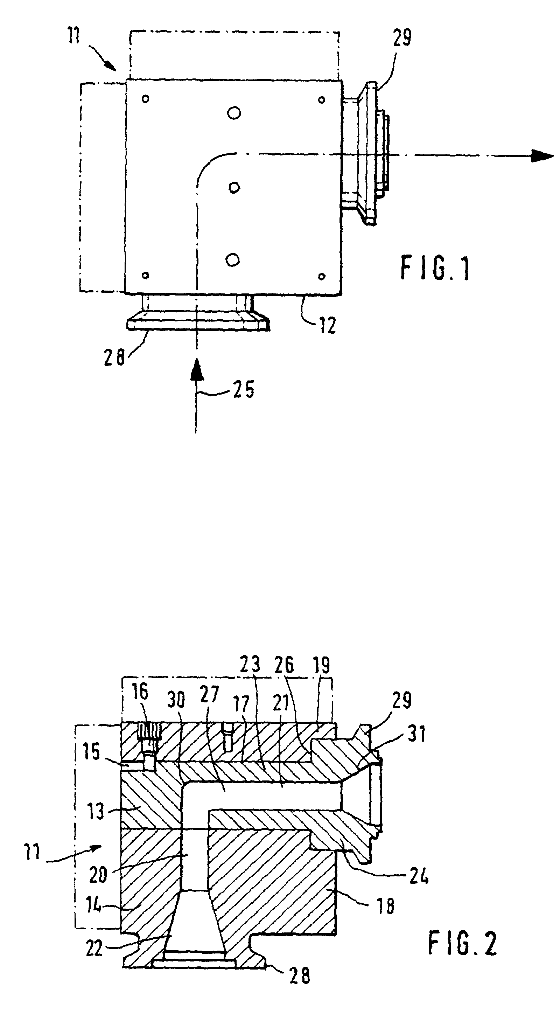

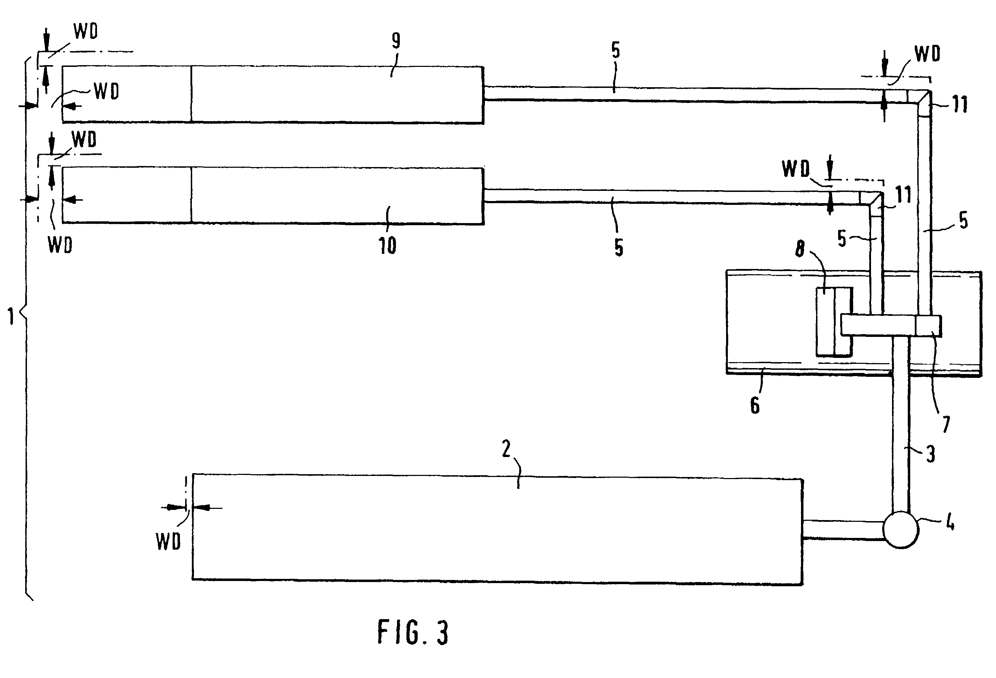

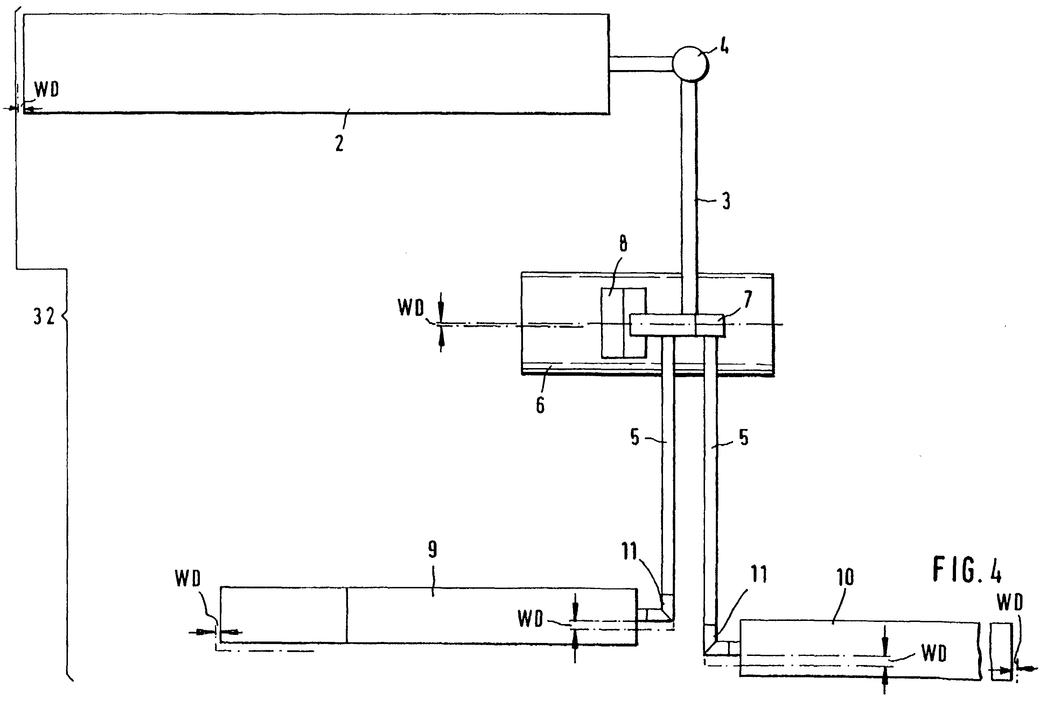

Fig. 1 zeigt in Seitenansicht einen Kompensator 11, der Flansche 28, 29 und an seinen Außenseiten Heizplatten 12 aufweist. Die Umrisse der Heizplatten 12 sind strichpunktiert angedeutet. Hierzu ist anzumerken, daß nicht nur der Kompensator 11, sondern auch die Leitungen 3, 5 und 5 (vgl. Figuren 3 und 4) beheizt sind, um die aus dem Extruder und den Koextrudern austretende Kunststoffschmelze auf ihrem Weg bis zum Extrusionswerkzeug für die Extrusion ausreichend viskoszuhalten. Der Kompensator 11 wird über die Flansche 28 und 29 an Leitungen angeschlossen, durch die beispielsweise eine Kunststoffschmelze hindurchströmt. Eine Durchströmungsrichtung 25 durch den Kompensator 11 ist durch einen geknickten Pfeil angedeutet.

Wie der Schnitt durch den Kompensator 11 in Fig. 2 erkennen läßt, besteht der Kompensator im wesentlichen aus zwei Teilen, nämlich einem Gehäuseblock 14 und einem Schiebekolben 13. Der Schiebekolben 13 ist entlang eines produktdichten Schiebesitzes 17 im Gehäuseblock 14 verschiebbar. Der oberhalb des Schiebekolbens 13 befindliche Teil ist durch die Bezugszahl 19 und der unterhalb des Schiebekolbens liegende Teil des Gehäuseblocks 14 ist durch die Bezugszahl 18 gekennzeichnet. Der Schiebekolben besteht aus zwei Kolbenabschnitten 23 und 24, die unterschiedliche Durchmesser besitzen. Dabei hat der längere Kolbenabschnitt 23 einen kleineren Durchmesser als der kürzere Kolbenabschnitt 24. Die Geometrie des zylindrischen Schiebesitzes 17 ist dem Umriß des Schiebekolbens 13 angepaßt, wobei sich der Schiebesitz 17 über einen Bund 26 aufweitet, so daß der kürzere Kolbenabschnitt 24 aufgenommen werden kann.

Der Kompensator 11 enthält einen geknickten Durchflußkanal 27, der jeweils an seiner Eintritts- und Austrittsseite mit dem Flansch 28 bzw. 29 zum Anschluß des Kompensators 11 an festinstallierte Einrichtungen wie Leitungen, Durchflußkanäle und dergleichen ausgestattet ist. Der Durchflußkanal 27 setzt sich aus einem ersten Durchflußkanalabschnitt 20 und einem zweiten Durchflußkanalabschnitt 21 mit einem Kniebogen 30 zusammen. Der erste Durchflußkanalabschnitt 20 befindet sich in dem Gehäuseblock 14, während der zweite Durchflußkanalabschnitt 21 mit dem Kniebogen 30 im Schiebekolben 13 angeordnet ist. Bei Betriebstemperatur der den Kompensator 11 und die festinstallierten Einrichtungen durchströmenden Kunststoffschmelze nimmt der Schiebekolben 13 innerhalb des Schiebesitzes 17 eine Stellung ein, in der der Kniebogen 30 deckungsgleich mit dem ersten Durchflußkanalabschnitt 20 im unteren Gehäuseblock 14 ist und die eine Stirnfläche des Schiebekolbens 13 mit der einen Seitenwand des Gehäuseblocks 14 fluchtet.

Der Gehäuseblock 14 umschließt den zylindrischen Schiebesitz 17 des Schiebekolbens 13. Der kürzere Kolbenabschnitt 24 liegt bei Betriebstemperatur des Kompensators 11 gegen den Bund 26 an und bei Temperaturen kleiner als die Betriebstemperatur wird der Schiebekolben 13 in Richtung des zweiten Durchflußkanalabschnitts 21 verschoben. Dabei rückt der kürzere Kolbenabschnitt 24 von dem Bund 26 ab, und der Kniebogen 30 ist nicht mehr deckungsgleich mit dem ersten Durchflußkanalabschnitt 20 im unteren Teil 18 des Gehäuseblocks 14. Der Verschiebeweg des Schiebekolbens 13 ist gleich dem Durchmesser des ersten Durchflußkanalabschnittes 20 weniger mindestens 5 mm, so daß bei maximaler Verschiebung des Schiebekolbens 13 der Kniebogen 30 auf einer Strecke von mindestens 5 mm sich mit dem Durchflußkanalabschnitt 20 überdeckt. Dadurch ist gewährleistet, daß der Durchflußkanal 27 in jeder Schiebekolbenposition noch durchgängig für die Kunststoffschmelze bleibt.

Die Durchflußkanalabschnitte 20 und 21 gehen jeweils in Richtung der Flansche 28 und 29 in konische Aufweitungen 22 bzw. 31 über. Jedoch sind solche konischen Aufweitungen nicht zwingend, ebenso können die Durchflußkanalabschnitte geradlinig in die Flansche 28, 29 übergehen.

Der Schiebekolben 13 weist eine Längsnut 15 auf, in die ein Stift 16 eingreift, der sich durch den oberen Teil 19 des Gehäuseblockts 14 hindurcherstreckt. Mit Hilfe dieses Stiftes 16 ist der Schiebekolben 13 drehgesichert und kann nur eine Längsverschiebung in dem Gehäuseblock 14 ausführen, da der Stift 16 in der Längsnut 15 des Schiebekolbens 13 zwangsgeführt ist.

Anhand der Fig. 3 und 4 wird der Einsatz von Kompensatoren 11 in Leitungen innerhalb einer Kunststoffextrusionsanlage beschrieben. Eine derartige Extrusionsanlage 1 umfaßt gemäß Fig. 3 einen Hauptextruder 2 und zwei Koextruder 9 und 10, die parallel zu dem Hauptextruder 2 ausgerichtet sind. Von den Koextrudern 9 und 10 führen rechtwinklige Schmelzeleitungen 5,5 zu einem Adapter 7. Der Hauptextruder 2 ist gleichfalls über eine rechtwinklige Schmelzeleitung 3, in der ein Filter 4 eingebaut ist, mit dem Adapter 7 verbunden. In dem Adapter 7 werden in bekannter Weise die drei Kunststoffstränge von den Extrudern, nämlich der eine Strang aus dem Hauptextruder 2 und die beiden Stränge aus den beiden Koextrudern 9 und 10 einander überlagert, und einer Mehrschichtdüse 8, die im allgemeinen eine Breitschlitzdüse ist, zugeführt. Die Mehrschichtdüse 8 extrudiert eine sogenannte Vorfolie auf eine Abzugswalze 6, auf der die Vorfolie abgekühlt und anschließend beispielsweise durch ein Wasserbad hindurchtransportiert wird, bevor sie in einen Reckrahmen gelangt und biaxial verstreckt wird. Die Schmelzeleitungen 3, 5 und 5 sowie die Kompensatoren 11 sind jeweils von außen beheizt, beispielsweise durch elektrisch erwärmte Heizplatten an den Kompensatoren und Heizmittelrohre, die die Schmelzeleitungen umschließen. An den Knickstellen der Schmelzeleitungen 5, 5 sind jeweils die Kompensatoren 11 zum Ausgleich der durch Beheizung hervorgerufenen Längenänderungen der Schmelzeleitungen installiert. Durch die Extrusion der Kunststoffgranulate in den Extrudern 2, 9 und 10 kommt es zu einer beträchtlichen Aufheizung des aus den Extrudern austretenden geschmolzenen Kunststoffes. Um die Viskosität des geschmolzenen Kunststoffes bis zum Extrusionswerkzeug beizubehalten, erfolgt die Beheizung der Schmelzeleitungen, wobei sich die Längen der Schmelzeleitungen um ca. 2,8 mm/lfdm Schmelzeleitung erhöhen. Die Wärmeausdehnung berechnet sich gemäß der Formel

$$l_w = l_k + (l_k \cdot \Delta t \cdot c) = l_k - (l_k \cdot 250\ °C \cdot 11 \cdot 10^{-6}/°C)$$

mit der Länge $l_w$ der Schmelzeleitungen 3, 5 und 5 bei Betriebstemperatur und der Länge $l_k$ der Schmelzeleitungen 3, 5 und 5 im kalten Zustand. Die Temperaturdifferenz zwischen dem kalten und dem warmen Zustand wird mit 250 °C angenommen. Der spezifische Wärmeausdehnungskoeffizient beträgt dabei 11·10^-6/

°C.

In der Extrusionsanlage 1 wird das Filter 4 als Festpunkt für den Hauptextruder 2 sowie den gesamten restlichen Extrusionsaufbau vorgesehen. Von dem kalten Anfangszustand bis zum Erreichen der Betriebstemperatur der Kunststoffschmelze in den Schmelzeleitungen 3, 5 und 5 dehnen sich die Schmelzeleitungen um die Strecke WD sowohl in der Längs- als auch in der Querrichtung des Hauptextruders 2 und der Koextruder 9 und 10 aus. Die Strecke WD ist in Querrichtung eingezeichnet, während sie in der Längsrichtung nur durch einen Pfeil WD angedeutet ist. Da das Filter 4 des Hauptextruders 2 Festpunkt bzw. Bezugspunkt der Extrusionsanlage 1 ist, werden die Koextruder 9 und 10 über den Adapter 7 und die Mehrschichtdüse 8 hinweg um die Strecke WD in und quer zur Längsachse der Koextruder nach hinten verschoben. Aus diesem Grund müssen die Koextruder in Achsrichtung verfahrbar aufgestellt sein, um die Längenausdehnungen der Schmelzeleitungen in Längsrichtung ausgleichen zu können. Ein Ausgleich der Wärmeausdehnung in Querrichtung bereitet jedoch erhebliche Probleme, da aufwendige Schiebevorrichtungen für die Querrichtung kombiniert mit entsprechenden Wegmeßsystemen vorgesehen werden müssen, um Undichtigkeiten der Schmelzeleitungen an den Knickstellen zu vermeiden. Diese zusätzlichen Verschiebevorrichtungen müssen dann die Koextruder in Richtung ihrer Querachse entsprechend der Wärmeausdehnung der Schmelzeleitungen nachfahren.

Dem wird in der Weise abgeholfen, daß die Kompensatoren 11 an den Knickstellen der beiden Schmelzeleitungen 5 und 5 auf Warmmaß fest montiert werden und somit Festpunkte für die Wärmeausdehnungen der Schmelzeleitungen in Längsrichtung der Koextruder bilden. Die Kompensatoren 11 sind dabei derart montiert, daß ihre Schiebekolben 13 in Richtung Abzugswalze 6 ausgerichtet sind bzw. quer zur Längsrichtung der Koextruder 9 und 10 verlaufen. Unter Warmmaß ist zu verstehen, daß die Schiebekolben 13 der Kompensatoren 11 im kalten Zustand, d.h. bevor die Betriebstemperatur erreicht ist, in Richtung Abzugswalze 6 ausgefahren sind und ihre Kniebögen 30 mit dem jeweiligen Durchflußkanalabschnitt 20 nicht deckungsgleich sind.

Beim Aufheizen und den damit einhergehenden Längenausdehnungen der Schmelzeleitungen 3, 5 und 5 erfolgt einerseits eine Verschiebung der Koextruder 9 und 10 entlang ihren Längsachsen, von den festmontierten Kompensatoren 11 ausgehend, und andererseits bewegen sich die Schiebekolben 13 in Querrichtung aus dem ausgefahrenen Zustand in den eingefahrenen Zustand in die Gehäuseblöcke 14 der Kompensatoren 11 hinein. Sobald die Betriebstemperatur in der Extrusionsanlage 1 erreicht ist, nehmen die Schiebekolben 13 in den Schiebesitzen 17 die Stellung ein, in welcher der Kniebogen 30 deckungsgleich mit dem ersten Durchflußkanalabschnitt 20 ist. Die Verschiebung der Schiebekolben 13 aus der Stellung im kalten Zustand der Extrusionsanlage in die Stellung im Betriebszustand entspricht der Längenausdehnung der Schmelzeleitungen 3, 5 und 5, so daß es durch die Verschiebung zu einem Ausgleich der Längenänderungen an der Schmelzeleitungen kommt, ohne daß an den Knickstellen mechanische Spannungen auftreten.

In Fig. 4 ist eine Extrusionsanlage 32 dargestellt, die ebenso wie die Extrusionsanlage 1 einen Hauptextruder 2 und zwei Koextruder 9 und 10 umfaßt. Der einzige Unterschied gegenüber der Extrusionsanlage 1 der Fig. 3 besteht darin, daß die beiden Koextruder 9 und 10 nicht parallel zueinander sondern nur gegenüber der gemeinsamen Fluchtlinie etwas versetzt zueinander angeordnet sind. Es gilt jedoch, daß sowohl der Koextruder 9 als auch der Koextruder 10 parallel zu dem Hauptextruder 2 ausgerichtet sind. An den Knickstellen der Schmelzeleitungen 5 und 5, die von den Koextrudern 9 und 10 zu dem Adapter 7 führen, befinden sich jeweils Kompensatoren 11. Eine weitere Schmelzeleitung 3 verbindet den Hauptextruder 2 über ein Filter 4 mit dem Adapter 7. Das Filter 4 ist wiederum Festpunkt der Extrusionsanlage 32. Der Adapter 7 steht in Verbindung mit einer Mehrschichtdüse 8, aus der eine Vorfolie auf eine Abzugswalze 6 extrudiert wird. Die Wärmedehnung WD der Schmelzeleitungen 3, 5 und 5 in Querrichtung zu den Koextrudern wird durch die Kompensatoren 11 ausgeglichen. Hierzu sind die Schiebekolben 13 der Kompensatoren 11 im kalten Zustand der Extrusionsanlage 32 quer zu der Längsrichtung der Koextruder 9 und 10 in Richtung der Abzugswalze 6 ausgefahren. Durch die Längenausdehnung der Schmelzeleitungen 3, 5 und 5 bis zum Erreichen der Betriebstemperatur der Extrusionsanlage 32 werden die Schiebekolben 13 in die Kompensatoren 11 bzw. in deren Gehäuseblöcke 14 hineingeschoben, so daß beim Erreichen der Betriebstemperatur der Kniebogen 30 deckungsgleich mit dem ersten Durchflußkanalabschnitt 20 im Gehäuseblock 14 ist.

Der Ausgleich der Wärmedehnungen der Schmelzeleitungen 3, 5 und 5 mit Hilfe der Kompensatoren 11 erfolgt somit in der gleichen Weise wie sie im Zusammenhang mit der Extrusionsanlage 1 in Fig. 3 beschrieben wurde.

**Patentansprüche**

1. Kompensator zum Ausgleich der durch Temperatureinflüsse hervorgerufenen Längenänderungen festinstallierter Einrichtungen wie Leitungen, Durchflußkanäle und dergleichen, durch die ein Produkt hindurchfließt, wobei der Kompensator (11) in einem Gehäuseblock (14) einen Schiebekolben (13) enthält, der drehgesichert gegenüber dem Gehäuseblock (14) ist, der Schiebekolben (13) entlang eines produktdichten Schiebesitzes (17) im Gehäuseblock (14) beweglich ist, und der Kompensator (11) einen geknickten Durchflußkanal (27) aufweist, der jeweils an seiner Eintritts- und Austrittsseite mit einem Flansch (28,29) zum Anschluß der festinstallierten Einrichtungen ausgestattet ist.

2. Kompensator nach Anspruch 1, **dadurch gekennzeichnet, daß** der Gehäuseblock (14) den Schiebekolben (13) ausnimmt, daß in einem unteren Teil (18) des Gehäuseblocks (14) ein erster Durchflußkanalabschnitt (20) des Durchflußkanals (27) vorhanden ist und daß das untere Teil (18) mit einem Eintrittsflansch (28) ausgestattet ist.

3. Kompensator nach Anspruch 2, **dadurch gekennzeichnet, daß** der Schiebekolben (13) einen zweiten Durchflußkanalabschnitt (21) mit Kniebogen (30) des Durchflußkanals (27) enthält und bei Betriebstemperatur des die festinstallierten Einrichtungen und den Kompensator (11) durchströmenden Produkts eine Stellung innerhalb des Schiebesitzes (17) einnimmt, in der der Kniebogen (30) deckungsgleich mit dem ersten Durchflußkanalabschnitt (20) im Gehäuseblock (14) ist, der mit einem Austrittsflansch (29) ausgestattet ist.

4. Kompensator nach Anspruch 1, **dadurch gekennzeichnet, daß** sich der Schiebekolben (13) aus zwei Kolbenabschnitten (23,24) mit unterschiedlichen Durchmessern zusammensetzt, von denen der längere Kolbenabschnitt (23) einen kleineren Durchmesser als der kürzere Kolbenabschnitt (24) hat.

5. Kompensator nach Anspruch 4, **dadurch gekennzeichnet, daß** der Gehäuseblock (14) den zylindrischen Schiebesitz (17) des Schiebekolbens (13) umschließt und daß der Schiebesitz (17) sich über einen Bund (26) so weit aufweitet, daß der kürzere Kolbenabschnitt (24) aufgenommen werden kann.

6. Kompensator nach Anspruch 5, **dadurch gekennzeichnet, daß** bei Betriebstemperatur des Kompensators der kürzere Kolbenabschnitt (24) gegen den Bund (26) anliegt und daß bei Temperaturen kleiner als die Betriebstemperatur der Schiebekolben (13) in Richtung des zweitenDurchflußkanalabschnittes (21) verschoben und der kürzere Kolbenabschnitt (24) von dem Bund (26) abgerückt ist.

7. Kompensator nach Anspruch 6, **dadurch gekennzeichnet, daß** der Verschiebeweg des Schiebekolbens (13) gleich dem Durchmesser des ersten Durchflußkanalabschnittes (20) weniger mindestens 5 mm ist.

8. Kompensator nach Anspruch 1, **dadurch gekennzeichnet, daß** an den Außenseiten des Kompensators (11) Heizplatten (12) angebracht sind.

9. Verwendung des Kompensators als Verbindungselement zweier rechtwinklig zueinander verlaufenden Schmelzeleitungen einer Koextrusionsanlage für Mehrschichtfolien.

10. Verwendung des Kompensators nach Anspruch 9 zum Ausgleich der axialen Wärmedehnungen der mit dem Kompensator verbundenen Schmelzeleitungen und des an eine der Schmelzeleitungen angeschlossenen Koextruders.

**Claims**

1. A compensator for compensating for temperature-induced changes in length of fixed installations, such as pipe work, flow channels and the like, through which a product flows, wherein the compensator (11) contains in a housing block (14) a sliding ram (13) which is secured against rotation with respect to the housing block (14), the sliding ram (13) is movable along a product-impermeable sliding seat (17) in the housing block (14), and the compensator (11) has a bent through-flow channel (27), which is fitted at its entry and exit ends with a respective flange (28, 29) for connection to the fixed installations.

2. A compensator according to claim 1, **characterised in that** the housing block (14) receives the sliding ram (13), a first through-flow channel section (20) of the through-flow channel (27) is provided in a lower part (18) of the housing block (14) and the lower part (18) is fitted with an entry flange (28).

3. A compensator according to claim 2, **characterised in that** the sliding ram (13) contains a second through-flow channel section (21) with an elbow (30) of the through-flow channel (27) and, at the operating temperature of the product flowing through the fixed installations and the compensator (11), takes up a position within the sliding seat (17) in which the elbow (30) is in register with the first through-flow channel section (20) in the housing block (14), which section is fitted with an exit flange (29).

4. A compensator according to claim 1, **characterised in that** the sliding ram (13) comprises two ram portions (23, 24) of different diameters, of which the longer ram portion (23) has a smaller diameter than the shorter ram portion (24).

5. A compensator according to claim 4, **characterised in that** the housing block (14) surrounds the cylindrical sliding seat (17) of the sliding ram (13) and the sliding seat (17) widens by way of a collar (26) to such an extent that the shorter ram portion (24) can be accommodated.

6. A compensator according to claim 5, **characterised in that**, at the operating temperature of the compensator, the shorter ram portion (24) abuts the collar (26) and at temperatures less than the operating temperature the sliding ram (13) is displaced in the direction of the second through-flow channel section (21) and the shorter ram portion (24) is moved away from the collar (26).

7. A compensator according to claim 6, **characterised in that** the stroke of the sliding ram (13) is the same as the diameter of the first through-flow channel section (20), less at least 5 mm.

8. A compensator according to claim 1, **characterised in that** heating panels (12) are mounted on the outsides of the compensator (11).

9. Use of the compensator as connecting element for two melt pipes running at right angles to one another of a co-extrusion installation for multi-layer films.

10. Use of the compensator according to claim 9 for compensating for the axial thermal expansions of the melt pipes connected to the compensator and of the co-extruder connected to one of the melt pipes.

**Revendications**

1. Compensateur pour la compensation des modifications de longueurs, influencées par la température, de dispositifs installés à demeure tels que des conduits, des canaux d'écoulement et analogues, à travers lesquels s'écoule un produit, dans lequel le compensateur (11) contient un piston coulissant (13) dans un boîtier monobloc (14), qui est fixé en antirotation par rapport au boîtier monobloc (14), le piston coulissant (13) est mobile dans le boîtier monobloc (14) le long d'un siège coulissant (17) étanche au produit et le compensateur (11) présente un canal d'écoulement coudé (27) qui est équipé, respectivement à son côté entrée et à son côté sortie, d'une bride (28, 29) pour le raccordement des dispositifs installés à demeure.

2. Compensateur selon la revendication 1, **caractérisé en ce que** le piston coulissant (13) vient se loger dans le boîtier monobloc (14), **en ce qu'**une première section de canal d'écoulement (20) du canal d'écoulement (27) est présente dans la partie inférieure (18) du boîtier monobloc (14) et **en ce que** la partie inférieure (18) est équipée d'une bride d'entrée (28).

**3.** Compensateur selon la revendication 2, **caractérisé en ce que** le piston coulissant (13) contient une deuxième section de canal d'écoulement (21) du canal d'écoulement (27) comprenant un coude (30) et, à la température de service du produit qui s'écoule à travers les dispositifs montés à demeure et à travers le compensateur (11), prend une position à l'intérieur du siège coulissant (17) dans laquelle le coude (30) coïncide avec la première section de canal d'écoulement (20) dans le boîtier monobloc (14), qui est équipée de la bride de sortie (29).

**4.** Compensateur selon la revendication 1, **caractérisé en ce que** le piston coulissant (13) se compose de deux sections de piston (23, 24) possédant des diamètres différents, la section de piston plus longue (23) possédant un diamètre inférieur à celui de la section de piston plus courte (24).

**5.** Compensateur selon la revendication 1, **caractérisé en ce que** le boîtier monobloc (14) renferme le siège coulissant cylindrique (17) du piston coulissant (13) et **en ce que** le siège coulissant (17) s'élargit au-delà d'une collerette (26) de telle sorte que la section de piston plus courte (24) peut venir s'y loger.

**6.** Compensateur selon la revendication 1, **caractérisé en ce que**, à la température de service du compensateur, la section de piston plus courte (24) entre en contact avec la collerette (26) et **en ce que**, à des températures inférieures à la température de service, le piston coulissant (13) se déplace dans la direction de la deuxième section de canal d'écoulement (21) et la section de piston plus courte (24) est repoussée à l'écart de la collerette (26).

**7.** Compensateur selon la revendication 1, **caractérisé en ce que** la course de déplacement du piston coulissant (13) est égale au diamètre de la première section de canal d'écoulement (20) moins au moins 5 mm.

**8.** Compensateur selon la revendication 1, **caractérisé en ce que** des plaques de chauffage (12) sont disposées sur les côtés externes du compensateur (11).

**9.** Utilisation du compensateur à titre d'élément de liaison de deux conduits s'étendant en formant un angle droit l'un par rapport à l'autre, destinés à des masses fondues et faisant partie d'une installation de coextrusion pour des feuilles multicouches.

**10.** Utilisation du compensateur selon la revendication 9, pour la compensation des dilatations thermiques axiales des conduits destinés à des masses fondues, reliés avec le compensateur, et de la coextrudeuse raccordée à un des conduits destinés à des masses fondues.

EP 0 849 065 B1

FIG.1

FIG.2

8

FIG. 3

EP 0 849 065 B1

EP 0 849 065 B1

FIG. 4